# EUROPÄISCHE PATENTSCHRIFT

(11) **EP 3 980 719 B1**
(45) Veröffentlichungstag und Bekanntmachung des Hinweises auf die Patenterteilung: **14.05.2025**
(21) Anmeldenummer: 20734130.6
(22) Anmeldetag: 16.06.2020
(51) Int. Cl.: G01C 21/10, B62D 15/02

(54) **VERFAHREN EINES FAHRZEUGS ZUM AUTOMATISIERTEN PARKEN**
METHOD FOR AUTOMATICALLY PARKING A VEHICLE
PROCÉDÉ DE STATIONNEMENT AUTOMATIQUE D'UN VÉHICULE

(30) Priorität: 05.08.2019 DE 102019211681
(43) Veröffentlichungstag der Anmeldung: 13.04.2022
(73) Patentinhaber: VOLKSWAGEN AKTIENGESELLSCHAFT, 38440 Wolfsburg (DE)
(72) Erfinder: MAREK, Gregor, 38176 Wendeburg (DE); SCHAPER, Markus, 31226 Peine (DE)
(86) Internationale Anmeldenummer: PCT/EP2020/066650
(87) Internationale Veröffentlichungsnummer: WO 2021/023420

(56) Entgegenhaltungen:
- DE-A1- 102013 015 348
- DE-A1- 102013 201 799

## Beschreibung

Die Erfindung betrifft ein Verfahren eines Fahrzeugs zum automatisierten Parken, insbesondere ein Verfahren zum automatisierten Einparken des Fahrzeugs an einer von einem Nutzer wiederholt angefahrenen Parkposition. Die Erfindung betrifft ferner ein zum Durchführen des erfindungsgemäßen Verfahrens eingerichtetes Fahrzeug sowie ein Computerprogramm.

Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, beispielsweise für Stausituationen.

Durch Anwendung solcher Assistenzsysteme geht die Autonomie des Fahrers bezüglich seiner Fahrentscheidungen zunehmend auf das Fahrzeug beziehungsweise in diese operierenden Steuereinheiten über. Am Ende dieser Entwicklungen steht ein automatisch fahrendes Fahrzeug, welches vollständig ohne Eingriffe eines Menschen manövrieren kann. Als Projektion von Fahrerassistenzsystemen dient automatisiertes Fahren dabei jedoch vor allem dem vollautomatisierten Personentransport. Darüber hinaus soll das automatische Fahren jedoch auch zunehmend Anwendung bei Parkvorgängen finden, da gerade diese von der Exaktheit der computergestützten Sensorerfassung und der darauf basierenden Lenkvorgänge profitieren.

Bislang ist für das automatische Parken in der Regel ein vorheriges Ausmessen einer leeren Parklücke notwendig, beispielsweise durch einmaliges Vorbeifahren mit dem Fahrzeug an der leeren Parklücke. Anhand der erlangten Messergebnisse werden dann die Größe einer Parkposition sowie die Freiheitsgrade des Fahrzeugs zum Manövrieren ermittelt. Neuartige Konzepte basieren hingegen auf dem Erlernen bekannter Trajektorien, um ein Fahrzeug beispielsweise automatisch von einer Grundstückseinfahrt in eine Garage zu fahren. Hierzu ist es in der Regel notwendig, dass ein Nutzer einen entsprechenden Modus aktiviert und dann zumindest einen Trainingslauf absolviert, um die Trajektorie im Fahrzeug zu speichern. Die Trajektorie wird dabei in der Regel in Form von Odometriedaten im Fahrzeug gespeichert.

Das Abspeichern der gelernten Trajektorien allein anhand von Odometriedaten macht in der Regel die Definition eines festen Startbereichs des automatischen Parkvorgangs notwendig. Dieser Startbereich entspricht dabei in der Regel stets dem vom Nutzer beim Anlernen gewählten Startbereich und ist daher häufig kein idealer Startbereich für die automatische Fahrzeugführung. Zudem muss der definierte Startbereich für das Initiieren der automatischen Fahrzeugführung exakt getroffen werden, was für einige Nutzer Schwierigkeiten darstellt.

Die DE 10 2013 201 799 A1 betrifft ein Fahrerassistenzsystem für ein Fahrzeug sowie ein Verfahren zum Erkennen einer bestimmten Position des Fahrzeugs, bei welchem nach Aufzeichnung einer abgefahrenen Trajektorie diese Trajektorie dann zur Abfahrt angeboten wird, sobald sich das Fahrzeug in der Nähe des Anfangspunktes der Trajektorie aufhält.

Der Erfindung liegt daher die Aufgabe zugrunde, die Nachteile des Standes der Technik zu überwinden und den Stand der Technik um ein alternatives Verfahren zum automatisierten Parken eines Fahrzeugs zu bereichern, das es ermöglicht bei guten Ergebnissen sowohl das Anlernen als auch das Einleiten automatisierter Parkvorgänge für einen Nutzer zu vereinfachen.

Die erfindungsgemäße Aufgabe wird gelöst durch die Gegenstände der Hauptansprüche. Bevorzugte Weiterbildungen sind Gegenstand der jeweils rückbezogenen Unteransprüche.

Ein erster Aspekt der vorliegenden Erfindung betrifft ein Verfahren zum automatisierten Parken eines Fahrzeugs. Das Verfahren wird dabei vorzugsweise von einer Steuereinheit des Fahrzeugs durchgeführt oder überwacht. Die Steuereinheit führt die Schritte des erfindungsgemäßen Verfahrens mithin selbst durch oder steuert andere Komponenten zum Durchführen der jeweiligen Verfahrensschritte. Ebenso ist eine Auslagerung von Schritten des erfindungsgemäßen Verfahrens, insbesondere hinsichtlich der Berechnung und des Speicherns größerer Datenmengen an einen leistungsstarken Netzwerkserver bevorzugt. In solch einer Durchführungsform umfasst das erfindungsgemäße Verfahren die entsprechenden Schritte zur Kommunikation zwischen einem Fahrzeug und einem Netzwerkserver.

In einem ersten Schritt des erfindungsgemäßen Verfahrens wird eine Nutzereingabe eines Nutzers zur Auswahl einer definierten Parkposition als Navigationsziel ermittelt. Diese Nutzereingabe wird dabei bevorzugt über ein Eingabemittel des Fahrzeugs oder über mit dem Fahrzeug verbundene Peripheriegeräte, wie beispielsweise Smartphones oder dergleichen, getätigt. Die Nutzereingabe erfolgt ebenso bevorzugt in Reaktion auf eine an den Nutzer ausgegebene Eingabeaufforderung. Im erfindungsgemäßen Verfahren betrifft die Nutzereingabe bevorzugt das Antrainieren (Definieren) oder das Abrufen einer bereits definierten Parkposition.

In einem weiteren Schritt des erfindungsgemäßen Verfahrens erfolgt in Reaktion auf die Nutzereingabe das Ermitteln eines Parkdatensatzes zu der definierten Parkposition. Das Ermitteln erfolgt dabei bevorzugt erstmalig oder wiederholt. Erfindungsgemäß weist der ermittelte Parkdatensatz dabei zumindest die folgenden Bestandteile auf. Zum einen weist der Parkdatensatz eine Position eines Startbereichs einer automatisierten Fahrzeugführung des Fahrzeugs zu der definierten Parkposition auf. Bevorzugt ist der Startbereich durch zumindest eine absolute geografische Koordinate und einen um die Koordinate gelegenen Bereich definiert. Ebenso bevorzugt ist der Startbereich durch eine Mehrzahl von geografischen Koordinaten als ein zusammenhängender geografischer Bereich definiert. Das erfindungsgemäße Verfahren nutzt somit keinen festen Startpunkt sondern einen Startbereich.

Ferner weist der in Reaktion auf die Nutzereingabe ermittelte Parkdatensatz Trajektorieinformationen einer automatisierten Fahrzeugführung von dem Startbereich zu der definierten Parkposition auf. Die Trajektorieinformationen sind dabei die zum automatischen Manövrieren des Fahrzeuges von dem Startbereich zu der Parkposition definierten Daten. Erfindungsgemäß weisen die Trajektorieinformationen dabei eine Mehrzahl die Quer- und Längsführung des Fahrzeugs entlang der Trajektorie, also von dem Startbereich zu der definierten Parkposition, betreffende Odometriedaten auf. Die Odometriedaten betreffen dabei beispielsweise Zeitreihen von Lenkeinschlägen und Beschleunigungen oder dergleichen. Die Odometriedaten sind besonders bevorzugt derart definiert, dass sie das automatisierte Führen des Fahrzeugs von einem festen Startbereich zu der definierten Startposition ermöglichen.

Erfindungsgemäß weisen die Trajektorieinformationen ferner auf Bilddaten basierende Umgebungsdaten eines Fahrschlauchs der Trajektorie auf. Mit anderen Worten weisen die Trajektorieinformationen für jeden oder zumindest für eine Vielzahl von Punkten entlang der Trajektorie zusätzliche Informationen zur Umgebung des Fahrzeugs auf, wobei diese zusätzlichen Informationen anhand von Bilddaten gewonnen wurden. Besonders bevorzugt wurden die auf Bilddaten basierenden Umgebungsdaten basierend auf kontinuierlichen Filmaufnahmen der Umgebung beim Fahren entlang der Trajektorie gewonnen. Alternativ wurden die auf Bilddaten basierenden Umgebungsdaten basierend auf diskontinuierlich entlang der Trajektorie aufgenommenen Kamerabildern gewonnen. Die auf Bilddaten basierenden Umgebungsdaten eines Fahrschlauchs der Trajektorie weisen somit zusätzliche Informationen zur Umgebung der Trajektorie auf, wobei eine Ausdehnung des erfassten Fahrschlauchs einem Erfassungswinkel der zum Erfassen der Bilddaten genutzten bildgebenden Sensoren entspricht.

Das Verwenden von auf Bilddaten basierenden Umgebungsdaten eines Fahrschlauchs der Trajektorie vom Startbereich zur definierten Parkposition ermöglicht im erfindungsgemäßen Verfahren vorteilhaft den Beginn der automatischen Fahrzeugführung innerhalb eines ausgedehnten Startbereichs oder sogar an einem beliebigen Punkt in einem gewissen Abstand zu dem Fahrschlauch der Trajektorie, wie im Folgenden im Detail erläutert. Ferner ermöglichen die erfindungsgemäßen Trajektorieinformationen vorteilhaft eine verbesserte Übergabe von einer manuellen Fahrzeugnavigation an eine automatische Fahrzeugführung, wie noch erläutert.

Ein erster Aspekt der Erfindung besteht somit in der vorteilhaften Verwendung zusätzlicher Daten zum Ermitteln der Trajektorieinformationen für das automatische Parken. In einer bevorzugten Durchführungsform des erfindungsgemäßen Verfahrens weisen die Bilddaten für eine Vielzahl von Punkten entlang der Trajektorie, besonders bevorzugt für jeden Punkt der Trajektorie, Bilddaten auf. Mit anderen Worten werden die oben beschriebenen diskontinuierlich oder kontinuierlich erfassten Bilddaten (Foto/Video) unmittelbar in den Trajektorieinformationen abgelegt. Vorteilhaft wird somit ein maximaler Informationsgehalt der Bilddaten erhalten.

Ebenfalls bevorzugt weisen die Bilddaten für eine Vielzahl von Punkten entlang der Trajektorie, besonders bevorzugt für jeden Punkt der Trajektorie, eine 3D-Punktwolke auf. Die 3D-Punktwolke ist dabei mittels der bildgebenden Sensoren, beispielsweise in Zusammenarbeit mit einer Lasermesseinrichtung, ermittelt worden und stellt bei geringerer Dateigröße eine noch immer detailgetreue Repräsentation der Umgebung mit hohem Informationsgehalt dar. Jeder Punkt wird dabei bevorzugt mit seinen absoluten Koordinaten im Raum abgespeichert.

Ebenfalls bevorzugt weisen die Bilddaten für eine Vielzahl von Punkten entlang der Trajektorie, besonders bevorzugt für jeden Punkt der Trajektorie, Strukturdaten des Fahrschlauchs auf. Die Strukturdaten sind dabei bevorzugt durch Segmentierung und/oder Struktur- beziehungsweise Objekterkennung basierend auf den Bilddaten oder der 3D-Punktwolke ermittelt. Die Strukturdaten enthalten beispielsweise Informationen zu Lage und Ausrichtung charakteristischer Kanten und/oder zu Lage und Ausdehnung charakteristischer Flächen. Die Strukturdaten ermöglichen somit vorteilhaft eine weitere Reduzierung der Datengröße beziehungsweise des Speicherbedarfs der auf Bilddaten basierenden Umgebungsdaten des Fahrschlauchs. Dies ist hinsichtlich eines vom Fahrzeug durchgeführten Verfahrens vorteilhaft.

Erfindungsgemäß ermöglichen die in den Trajektorieinformationen gespeicherten auf Bilddaten basierenden Umgebungsdaten einen Vergleich mit später erfassten auf Bilddaten basierenden Umgebungsdaten. Die Umgebungsdaten sind mithin derart gewählt beziehungsweise abgespeichert, dass sie bei der automatischen Fahrzeugführung zum Ermitteln einer Fahrzeugposition durch Vergleich der gespeicherten Umgebungsdaten mit aktuell erfassten Bilddaten, beziehungsweise daraus abgeleiteten aktuellen Umgebungsdaten, nutzbar sind. Das erfindungsgemäße Verwenden von Trajektorieinformationen, die zumindest teilweise auf Bilddaten basieren, ist sowohl beim Trainieren des Fahrzeugs, also bei der Definition einer Parkposition, als auch beim Anfahren einer definierten Parkposition zu berücksichtigen. Die gespeicherten auf Bilddaten basierenden Umgebungsdaten ermöglichen im erfindungsgemäßen Verfahren vorteilhaft eine Fahrzeugführung mit deutlich höherer Präzision.

In einer bevorzugten Durchführungsform des erfindungsgemäßen Verfahrens weist dieses ferner die folgenden Schritte auf. Zunächst erfolgt eine manuelle Quer- und Längsführung des Fahrzeugs durch einen Nutzer, sprich ein nicht automatisierter Betrieb des Fahrzeugs. Bei dieser manuellen Fahrzeugführung handelt es sich nicht zwangsläufig um eine in Bezug zu einem Parkvorgang stehende manuelle Fahrzeugführung. Im erfindungsgemäßen Verfahren erfolgen ferner ein Erfassen der manuellen Fahrzeugführung und ein Speichern von erfassten Daten zur manuellen Fahrzeugführung für ein gleitendes Intervall. Mit anderen Worten wird die manuelle Fahrzeugführung für ein gleitendes Intervall vor einem aktuellen Zeitpunkt beziehungsweise einem aktuellen Streckenpunkt erfasst. Bei dem gleitenden Zeitfenster handelt es sich bevorzugt um ein gleitendes Zeitfenster und/oder um einen gleitenden Streckenabschnitt. Besonders bevorzugt wird die manuelle Fahrzeugführung stets für einen festen Zeitabschnitt vor einem aktuellen Zeitpunkt, beispielsweise für die zurückliegenden 30 s, 1 min, 5 min oder dergleichen erfasst. Ebenso besonders bevorzugt wird die manuelle Fahrzeugführung stets für einen festen Streckenabschnitt vor einer aktuellen Position, beispielsweise für die zuletzt gefahrenen 50 m, 100 m oder 500 m erfasst und gespeichert.

Gemäß dieser Durchführungsform erfolgt ferner das Erkennen eines Abschlusses der manuellen Fahrzeugführung an einer Parkposition. Das Erkennen des Abschlusses der manuellen Fahrzeugführung betrifft dabei nicht das Umschalten auf automatische Fahrzeugführung sondern einen Nutzerwunsch zum Parken des Fahrzeugs. Es gibt eine Mehrzahl von Indikatoren für den Abschluss der manuellen Fahrzeugführung, wie beispielsweise das Abschalten des Motors, das Lösen des Sicherheitsgurts, das Öffnen des Kofferraums, der Aufenthalt nahe eines Zielorts einer Navigation, das Erkennen eines gespeicherten WLAN Netzes, Signale von Sitzdrucksensoren oder dergleichen. Im erfindungsgemäßen Verfahren werden bevorzugt eine Mehrzahl dieser Indikatoren zum Erkennen des Abschlusses der manuellen Fahrzeugführung genutzt. Dem Fachmann sind im Zusammenhang mit anderen Parkfunktionen bereits Methoden zum Erkennen des Abstellens eines Fahrzeugs bekannt; auf eine weitergehende Beschreibung wird daher verzichtet.

Wird im erfindungsgemäßen Verfahren der Abschluss der manuellen Fahrzeugführung erkannt, wird in Reaktion darauf eine Eingabeaufforderung an den Nutzer ausgegeben. Die Ausgabe erfolgt bevorzugt optisch und/oder akustisch durch Anzeigemittel des Fahrzeugs und/oder durch ein mobiles Endgerät, beispielsweise ein Smartphone, des Nutzers. Die Eingabeaufforderung betrifft dabei das Speichern der aktuellen Parkposition des Fahrzeugs als eine definierte Parkposition des erfindungsgemäßen Verfahrens. Der Nutzer wird also dahingehend abgefragt, ob zukünftig ein automatischer Parkvorgang zu der aktuellen Parkposition gewünscht ist. In Reaktion auf die Eingabeaufforderung wird von dem Nutzer die bereits oben erwähnte Nutzereingabe ermittelt. Die Nutzereingabe enthält gemäß dieser Durchführungsform mithin Informationen, ob die aktuelle Parkposition als erfindungsgemäße definierte Parkposition für ein automatisches Parken aufgenommen werden soll oder nicht.

In Reaktion auf die Nutzereingabe, insbesondere in Reaktion auf eine Nutzereingabe, wonach die aktuelle Parkposition als erfindungsgemäße definierte Parkposition für ein automatisches Parken aufgenommen werden soll, erfolgt ferner das bereits oben erwähnte erfindungsgemäße Ermitteln des Parkdatensatzes zu der definierten Parkposition. Das Ermitteln des oben definierten Parkdatensatzes aufweisend die Position eines Startbereichs und die Trajektorieinformationen erfolgt dabei anhand der gespeicherten Daten zur manuellen Fahrzeugführung, also anhand der für das gleitende Intervall gespeicherten Daten zur manuellen Fahrzeugführung. Das Abspeichern von Daten zur manuellen Fahrzeugführung ermöglicht somit vorteilhaft eine Nutzerauswahl bezüglich einer bereits eingenommenen aktuellen Parkposition, ohne dass der Nutzer einen Startbereich des automatisierten Parkens als Teil des Anlernvorgangs selbst definieren muss. Somit werden Bedienfehler des Nutzers minimiert.

In einer bevorzugten Durchführungsform enthält die Eingabeaufforderung weitere Informationen und/oder ist das Ausgeben der Eingabeaufforderung an weitere Bedingungen gekoppelt. Die Eingabeaufforderung enthält bevorzugt Informationen zu der erfassten manuellen Fahrzeugführung in dem gleitenden Intervall. Beispielsweise wird die in dem gleitenden Intervall befahrene Trajektorie in Überlagerung mit einer Karte dargestellt. Besonders bevorzugt ermöglicht die Eingabeaufforderung eine Auswahl von für das Ermitteln des Parkdatensatzes zu nutzenden Daten aus den erfassten Daten zur manuellen Fahrzeugführung. Somit kann ein Nutzer beispielsweise einen Startbereich der automatischen Fahrzeugführung entlang der erfassten Trajektorie auswählen, mithin einen Teilbereich der erfassten Trajektorie auswählen. Bevorzugt kann nur ein Punkt der Trajektorie zur Definition eines Startbereichs gewählt werden, für den die gespeicherten Daten zur manuellen Fahrzeugführung eine GPS-Position aufweisen.

Ferner bevorzugt kann ein Nutzer in Reaktion auf die Eingabeaufforderung mit seiner Nutzereingabe Korrekturen an einer erfassten Trajektorie der manuellen Fahrzeugführung vornehmen, beispielsweise den Abstand der Trajektorie zu einem nah umfahrenen Hindernis erhöhen. Eine solche Korrektur ist jedoch nur innerhalb des durch die erfassten Bilddaten definierten Fahrschlauchs der Trajektorie möglich. Alternativ bevorzugt erfolgt vor dem Ausgeben der Eingabeaufforderung eine Prüfung, ob die manuelle Fahrzeugführung in dem gleitenden Intervall mit einem Abstand unterhalb eines vorbestimmten Grenzwerts an einem oder mehreren Hindernissen vorbeiführte. Wird dies ermittelt, ist die erfasste Trajektorie der manuellen Fahrzeugführung gegebenenfalls nicht für eine automatische Fahrzeugführung geeignet und wird bevorzugt keine Eingabeaufforderung an den Nutzer ausgegeben.

In einer besonders bevorzugten Ausgestaltung dieser Durchführungsform weisen die gespeicherten Daten zur manuellen Fahrzeugführung Odometriedaten, Positionsdaten und Bilddaten eines Fahrschlauchs des Fahrzeugs entlang der Trajektorie der manuellen Fahrzeugführung auf. Somit wird vorteilhaft die für das Ermitteln eines erfindungsgemäßen Parkdatensatzes notwendige Datenbasis geschaffen. Die Odometriedaten weisen dazu bevorzugt Sensordaten zu Lenkeinschlägen und Beschleunigungen des Fahrzeugs auf. Die Bilddaten weisen bevorzugt mit ein oder mehreren Kameras, besonders bevorzugt einer Frontkamera, des Fahrzeugs erfasste Abbildungen einer Umgebung des Fahrzeugs auf. Die Positionsdaten weisen bevorzugt GPS-Koordinaten des Fahrzeugs auf, sofern diese entlang der Trajektorie der manuellen Fahrzeugführung erfassbar waren.

Ebenso bevorzugt werden die Daten zu der in dem gleitenden Intervall erfolgten manuellen Fahrzeugführung in einem Ringspeicher gespeichert. Mit anderen Worten werden mit neu gespeicherten Daten zur manuellen Fahrzeugführung stets zuvor gespeicherte Daten zur manuellen Fahrzeugführung überschrieben. Die überschriebenen Daten liegen dabei außerhalb des eingestellten gleitenden Zeitfensters. Die Verwendung eines Ringspeichers stellt vorteilhaft eine ressourcenschonende und aus Sicht des Datenschutzes zulässige Umsetzung der kontinuierlichen Speicherung von Daten zur manuellen Fahrzeugführung dar.

In einer ferner bevorzugten Durchführungsform des erfindungsgemäßen Verfahrens erfolgt ferner ein Speichern der Daten zur manuellen Fahrzeugführung für ein festes Intervall vor dem erkannten Abschluss der manuellen Fahrzeugführung. Mit anderen Worten werden die für das gleitende Intervall vor dem erkannten Abschluss der manuellen Fahrzeugführung gespeicherten Daten in einem Speicher fest abgelegt, beispielsweise dem Ringspeicher des Fahrzeugs entnommen und in einen nicht-volatilen Speicher abgelegt. Somit bewirkt das Erkennen eines Abschlusses einer manuellen Fahrzeugführung, also das Erkennen eines Parkens des Fahrzeugs stets, dass für einen Zeitabschnitt und/oder eine Fahrstrecke vor dem Parken erfasste Daten, zumindest zeitweise, in dem Fahrzeug gespeichert werden.

Gemäß dieser Durchführungsform erfolgt ferner ein Vergleich der fest abgelegten (gespeicherten) Daten mit auf dieselbe Weise zuvor fest gespeicherten Daten zur manuellen Fahrzeugführung für ein festes Intervall vor einem zuvor erkannten Abschluss einer manuellen Fahrzeugführung. Mit anderen Worten wird anhand von nach dem Erkennen eines Parkvorgangs automatisch gespeicherten Datensätzen zur Fahrzeugführung geprüft, ob derselbe Parkvorgang von dem Nutzer bereits mehrfach vorgenommen wurde. Das Ermitteln eines solchen wiederholt durchgeführten Parkvorgangs anhand der Daten zur Fahrzeugführung ist dabei vorteilhaft gegenüber dem Vergleich von GPS-Positionen, die beispielsweise in Gebäuden nicht immer verfügbar sind. Eine vor dem erkannten Parken (Abschluss der manuellen Fahrzeugführung) zuletzt erfasste GPS-Position wird allerdings bevorzugt zur Vorauswahl der miteinander zu vergleichenden gespeicherten Datensätze verwendet.

Wird gemäß dieser Durchführungsform eine Übereinstimmung der verglichenen Daten zur manuellen Fahrzeugführung ermittelt, wird bevorzugt ein vorläufiger Parkdatensatz einer definierten Parkposition anhand der als übereinstimmend ermittelten Daten zur manuellen Fahrzeugführung bestimmt. Das Ermitteln einer Übereinstimmung erfolgt dabei bevorzugt durch Abgleich der erfassten Odometrie, GPS und/oder Bilddaten, wobei eine Identität der verglichenen Daten nicht zwangsläufig erforderlich ist. Das Ermitteln eines vorläufigen Parkdatensatzes setzt bevorzugt das Ermitteln von zumindest zwei oder mehr, besonders bevorzugt von zumindest drei, vier oder fünf, übereinstimmenden Datensätzen voraus.

Bevorzugt wird für jede verglichene Datenkategorie, also Odometrie, GPS-Positionen und Bilddaten, ein Gütemaß definiert, dass eine Übereinstimmung der jeweiligen Daten anzeigt.

Wird gemäß dieser Durchführungsform keine Übereinstimmung mit zuvor fest gespeicherten Daten ermittelt, werden die aktuell fest gespeicherten Daten vorzugsweise mit einem Zeitstempel versehen und für eine vorbestimmte Zeit in dem Fahrzeug gespeichert und nach Ablauf der vorbestimmten Zeit automatisch gelöscht, beispielsweise nach Ablauf einer Woche.

Ist gemäß dieser Durchführungsform ein vorläufiger Parkdatensatz einer definierten Parkposition bestimmt worden, erfolgt bei der nächsten Lokalisierung des Fahrzeugs in einem Startbereich einer automatisierten Fahrzeugführung zu der definierten Parkposition gemäß dem vorläufigen Parkdatensatz eine Ausgabe einer Eingabeaufforderung an den Nutzer. Gemäß dieser Durchführungsform ist der Startbereich der automatischen Fahrzeugführung im vorläufigen Parkdatensatz bevorzugt automatisch bestimmt, beispielsweise als zuletzt erfasste GPS-Position zu der erfassten Parkposition und/oder in einem festen Streckenabstand vor der erfassten Parkposition. Mithin wird nach dem Erkennen einer bestimmten Anzahl vergleichbarer Parkvorgänge an einer bestimmten Parkposition und/oder mit vergleichbaren Anfahrtstrajektorien zur bestimmten Parkposition automatisch eine Eingabeaufforderung an den Nutzer ausgegeben, ob diese Parkposition als definierte Parkposition des erfindungsgemäßen Verfahrens für die automatisierte Fahrzeugführung gespeichert werden soll. In Reaktion auf diese Eingabeaufforderung wird die bereits oben erwähnte Nutzereingabe des Nutzers ermittelt. Eine positive Nutzereingabe bewirkt bevorzugt das Speichern des vorläufigen Parkdatensatzes als dauerhaften Parkdatensatz in dem Fahrzeug. Eine negative Nutzereingabe bewirkt hingegen bevorzugt das Löschen des gespeicherten vorläufigen Parkdatensatzes und gegebenenfalls das Setzen einer Flag, dass diese Parkposition auch zukünftig nicht gespeichert werden soll.

Die zuvor beschriebenen bevorzugten Durchführungsformen betreffen somit vorteilhaft das Antrainieren einer erfindungsgemäßen definierten Parkposition beziehungsweise die dafür notwendigen Voraussetzungen der Datenerfassung. Die beschriebene Durchführungsform ermöglicht es einem Nutzer sehr komfortabel eine definierte Parkposition anzulegen, insbesondere nach dem Parken des Fahrzeugs, beispielsweise mittels des Smartphones beim Entfernern vom Fahrzeug. Besonders bevorzugt ist ein automatisches Anlegen der definierten Parkposition nach Zustimmung des Nutzers zu einer vorläufig ermittelten Parkposition.

Eine ferner bevorzugte Durchführungsform des erfindungsgemäßen Verfahrens betrifft die Auswahl einer bereits definierten Parkposition als Navigationsziel, insbesondere durch die bereits oben beschriebene erfindungsgemäße Nutzereingabe des Nutzers. Mit anderen Worten wählt ein Nutzer als Ziel einer Navigation nicht eine Adresse oder einen signifikanten Punkt, beispielsweise einen Flughafen, auf einer Karte aus, sondern eine zuvor definierte Parkposition beispielsweise als eine Privatgarage auf einem Grundstück des Nutzers oder einen Tiefgaragenstellplatz an einem Arbeitsplatz des Nutzers. In Reaktion auf die Nutzereingabe wird erfindungsgemäß der zu der ausgewählten definierten Parkposition bereits gespeicherte Parkdatensatz ermittelt, also aus einem Speicher des Fahrzeugs abgerufen.

Erfindungsgemäß wird in einem weiteren Verfahrensschritt die Position des Startbereichs des zu der ausgewählten definierten Parkposition ermittelten Parkdatensatzes als Navigationsziel einer GPS-gestützten Navigation gesetzt. Bevorzugt ist ein Startbereich des Parkdatensatzes über eine absolute Position, insbesondere eine GPS-Position, bestimmt. Somit ist eine GPSgestützte Navigation zu dem Startbereich stets durchführbar. In dieser Durchführungsform des erfindungsgemäßen Verfahrens wird ferner eine Routenführung bis zum Erreichen des Navigationsziels durchgeführt. Die Routenführung erfolgt dabei durch Ausgabe von Navigationshinweisen und/oder Manöverinformationen an den Fahrer in bekannter Weise, so dass hier auf eine weiterführende Beschreibung verzichtet wird.

Weiterhin erfolgt im erfindungsgemäßen Verfahren ferner eine automatisierte Fahrzeugführung des Fahrzeugs ausgehend von dem Starbereich der definierten Parkposition und basierend auf den Trajektorieinformationen des zu der definierten Parkposition ermittelten Parkdatensatzes. Mit anderen Worten erfolgt bei der Ankunft des Fahrzeugs in dem Starbereich eine Übergabe an das automatisierte Parken, basierend auf dem erfindungsgemäß abgespeicherten Parkdatensatz. Die Übergabe erfolgt dabei bevorzugt vollautomatisch bei Detektion der Fahrzeugposition im Startbereich oder in Reaktion auf eine Nutzereingabe, beispielsweise nach einer Eingabeaufforderung. Das Verknüpfen der Fahrzeugnavigation mit der automatisierten Fahrzeugführung basiert somit auf der automatischen Zuweisung des Startbereichs einer definierten Parkposition an ein Navigationssystem sowie die Routenführung zu dem Startbereich der definierten Parkposition.

Gemäß einer bevorzugten Durchführungsform erfolgt ein nahezu nahtloser Übergang von einer nutzergesteuerten Fahrzeugführung zu einer automatisierten Fahrzeugführung. Dabei ist das Führen des Fahrzeugs durch einen Nutzer jedoch prinzipiell fehlernanfällig. Insbesondere weist das Zielgebiet einer Navigation in der Regel recht große Toleranzbereiche an, in denen die Navigation dennoch als erfolgreich beendet angesehen wird. Daher erfolgt gemäß einer ferner bevorzugten Durchführungsform das Ermitteln einer GPS-Position des Fahrzeugs am Ende der Routenführung und das Ermitteln einer relativen Raumlage von dem Fahrzeug und der Position des Startbereichs der als Navigationsziel ausgewählten definierten Parkposition.

Gemäß dieser ferner bevorzugten Durchführungsform erfolgt ferner die Ausgabe von auf der relativen Raumlage basierenden Fahranweisungen an einen Nutzer, wobei die Fahranweisungen derart bestimmt sind, dass sie dem Nutzer das Führen des Fahrzeugs in den Startbereich anzeigen. Mit anderen Worten wird die Routenführung zum Startbereich nach Abschluss der eigentlichen GPS-gestützten Navigation mit einer feineren Ortsauflösung fortgesetzt, um eine möglichst exakte Positionierung des Fahrzeugs in dem Startbereich zu ermöglichen. Die Fahranweisungen werden dabei bevorzugt nicht von einer klassischen Navigationsanwendung sondern von der Anwendung zum automatisierten Parken erzeugt. Folgt der Nutzer den ausgegebenen Fahranweisungen und erreicht so den Startbereich mit ausreichender Präzision, erfolgt gemäß dieser Durchführungsform das Initiieren der automatisierten Fahrzeugführung entlang der gespeicherten Trajektorie zu der definierten Parkposition, insbesondere unter Abgleich der auf Bilddaten basierenden Umgebungsdaten.

In einer alternativ bevorzugten Durchführungsform des erfindungsgemäßen Verfahrens wird ebenfalls eine GPS-Position des Fahrzeugs am Ende der Routenführung ermittelt. Anstatt zu dem Startbereich wird das Fahrzeug gemäß dieser Durchführungsform zu dem Fahrschlauch der in dem Parkdatensatz gespeicherten Trajektorie geführt. Somit erfolgen das Ermitteln einer relativen Raumlage von dem Fahrzeug und einem Fangbereich der definierten Parkposition und das Ausgeben von auf der relativen Raumlage basierenden Fahranweisungen an einen Nutzer. Sofern der Nutzer den Fangbereich erreicht hat, erfolgt wiederum das Initiieren der automatisierten Fahrzeugführung zu der definierten Parkposition.

Der Fangbereich dieser Durchführungsform umfasst dabei den Abbildungsbereich von bildgebenden Sensoren des Fahrzeugs entlang der Trajektorie vom Startbereich zur definierten Parkposition. Bei den bildgebenden Sensoren handelt es sich bevorzugt um die Sensoren, welche im erfindungsgemäßen Verfahren die den Umgebungsdaten zugrunde liegenden Bilddaten erfassen. Diese Umgebungsdaten ermöglichen vorteilhaft ein Einordnen des Fahrzeugs auf die Trajektorie zu der definierten Parkposition sobald ein ausreichender Überlapp zwischen aktuell erfassten Bilddaten des Fahrzeugs und den Umgebungsdaten der erfindungsgemäßen Trajektorieinformationen vorliegt. Der erfindungsgemäße Parkdatensatz ermöglicht somit vorteilhaft auch bei einem Beenden der Routenführung mit großem Abstand zu dem Startbereich der definierten Parkposition einen schnellen Start der automatisierten Fahrzeugführung zu der gespeicherten Parkposition der definierten Parkposition.

Ein weiterer Aspekt der Erfindung betrifft ein Fahrzeug, insbesondere einen zum Durchführen der Schritte eines Fahrzeugs im erfindungsgemäßen Verfahren eingerichteten Personenkraftwagen mit Verbrennungs-, Elektro- oder Hybridmotor. Das Kraftfahrzeug weist hierfür zumindest einen zum Erfassen von Umgebungsdaten eingerichteten ersten Sensor und zumindest einen zum Erfassen von Fahrzeugdaten eingerichteten zweiten Sensor auf.

Der zumindest eine erste Sensor ist dabei dazu ausgebildet, die Umgebung des Fahrzeugs betreffende Sensorsignale zu erfassen. Der zumindest eine zweite Sensor ist dabei dazu ausgebildet, das Fahrzeug selbst betreffende Sensorsignale zu erfassen. Dabei versetzt ein mittels des zumindest einen ersten Sensors empfangenes Umgebungssignal das Kraftfahrzeug bevorzugt in die Lage, sich über seine Umgebung zu informieren und bildet bevorzugt eine Vielzahl von Umweltinformationen ab. Ein mittels des zumindest einen zweiten Sensors empfangenes Zustandssignal versetzt das Kraftfahrzeug bevorzugt in die Lage, sich über seinen Eigenzustand zu informieren und bildet dazu bevorzugt eine Vielzahl von Zustandsinformationen ab. Bei den ersten Sensoren handelt es sich beispielsweise um bildgebende Sensoren, wie Kameras, oder um Abstandssensoren, wie LIDAR. Bei den zweiten Sensoren handelt es sich beispielsweise um Raddrehzahlmesser und dergleichen.

Das Fahrzeug weist ferner eine Nutzerschnittstelle mit Eingabemitteln und Ausgabemitteln auf, wobei es sich vorzugsweise um einen Bildschirm, besonders bevorzugt um ein Touch-Display eines Infotainmentsystems des Fahrzeugs handelt. Alternativ oder zusätzlich wird eine Nutzerschnittstelle über ein mit dem Fahrzeug verbundenes mobiles Endgerät zur Verfügung gestellt, insbesondere über ein mit dem Fahrzeug über eine Drahtlosverbindung verbundenes Smartphone. Das Fahrzeug kann darüber hinaus weitere Eingabemittel, wie Druckknöpfe, Drehregler oder dergleichen sowie weitere Ausgabemittel, wie Lautsprecher oder dergleichen aufweisen, die ebenfalls in dem erfindungsgemäßen Verfahren zum Einsatz kommen können.

Das erfindungsgemäße Fahrzeug weist ferner bevorzugt ein zur Kommunikation mit einem mobilen Endgerät eingerichtetes (erstes) Kommunikationsmodul auf. Das Kommunikationsmodul ist insbesondere zur Kommunikation über eine Luftschnittstelle, beispielsweise ein Mobilfunknetz (4G, 5G), WLAN oder dergleichen eingerichtet. Das Kommunikationsmodul ist ferner bevorzugt zur Kommunikation mit anderen Fahrzeugen, mit einer smarten Infrastruktur und/oder mit einem Netzwerkserver eingerichtet und ausgebildet.

Das Fahrzeug weist ferner eine Steuereinheit auf, die dafür eingerichtet ist, die Schritte des Fahrzeugs im erfindungsgemäßen Verfahren durchzuführen. Die Steuereinheit ist dabei dazu ausgebildet, die Schritte des erfindungsgemäßen Verfahrens selbst durchzuführen oder andere Bauteile des Fahrzeugs zum Durchführen der Schritte anzusteuern. Die Steuereinheit ist insbesondere dazu ausgebildet, eine Nutzereingabe eines Nutzers betreffend eine definierte Parkposition zu ermitteln und einen Parkdatensatz zu der definierten Parkposition in Reaktion auf die Nutzereingabe zu ermitteln, wobei der Parkdatensatz eine Position eines Startbereichs einer automatisierten Fahrzeugführung des Fahrzeugs zu der definierten Parkposition und Trajektorieinformationen einer automatisierten Fahrzeugführung von dem Startbereich zu der definierten Parkposition aufweist und wobei die Trajektorieinformationen eine Mehrzahl die Quer- und Längsführung des Fahrzeugs entlang der Trajektorie betreffende Odometriedaten und auf Bilddaten basierende Umgebungsdaten eines Fahrschlauchs der Trajektorie aufweisen.

Ein weiterer Aspekt der Erfindung betrifft eine Steuereinheit eines Fahrzeugs mit zumindest einem zum Erfassen von Umgebungsdaten eingerichteten ersten Sensor, zumindest einem zum Erfassen von Fahrzeugdaten eingerichteten zweiten Sensor und einer Ausgabemittel und Eingabemittel aufweisenden Nutzerschnittstelle, wobei die Steuereinheit dafür eingerichtet ist, eine Nutzereingabe eines Nutzers betreffend eine definierte Parkposition zu ermitteln und einen Parkdatensatzes zu der definierten Parkposition in Reaktion auf die Nutzereingabe zu ermitteln, wobei der Parkdatensatz eine Position eines Startbereichs einer automatisierten Fahrzeugführung des Fahrzeugs zu der definierten Parkposition und Trajektorieinformationen einer automatisierten Fahrzeugführung von dem Startbereich zur definierten Parkposition aufweist und wobei die Trajektorieinformationen eine Mehrzahl die Quer- und Längsführung des Fahrzeugs entlang der Trajektorie betreffende Odometriedaten und auf Bilddaten basierende Umgebungsdaten eines Fahrschlauchs der Trajektorie aufweisen.

Ein weiterer Aspekt der Erfindung betrifft ein Computerprogramm, umfassend Befehle, die bei der Ausführung des Programms durch einen Computer, wie beispielsweise eine Steuereinheit eines Fahrzeugs, diesen veranlassen, die vorgenannten Schritte des Fahrzeugs im erfindungsgemäßen Verfahren durchzuführen. Bevorzugte Weiterbildungen des Fahrzeugs, der Steuereinheit und des Computerprogramms entsprechen den zum erfindungsgemäßen Verfahren erläuterten und beanspruchten bevorzugten Durchführungsformen.

Die Verfahrensschritte des erfindungsgemäßen Verfahrens können durch elektrische oder elektronische Bauteile oder Komponenten (Hardware), durch Firmware (ASIC) implementiert sein oder durch Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert.

Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet, mit anderen Komponenten, beispielsweise einem Kommunikationsmodul, und gegebenenfalls ein oder mehreren Sensoren zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne von dem erfindungsgemäßen Verfahren abzuweichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Systems aus einem erfindungsgemäßen Fahrzeug und einem Netzwerkserver gemäß einer Ausführungsform; und
- Figur 2: ein Ablaufdiagramm eines im erfindungsgemäßen System durchgeführten erfindungsgemäßen Verfahrens gemäß einer Durchführungsform.

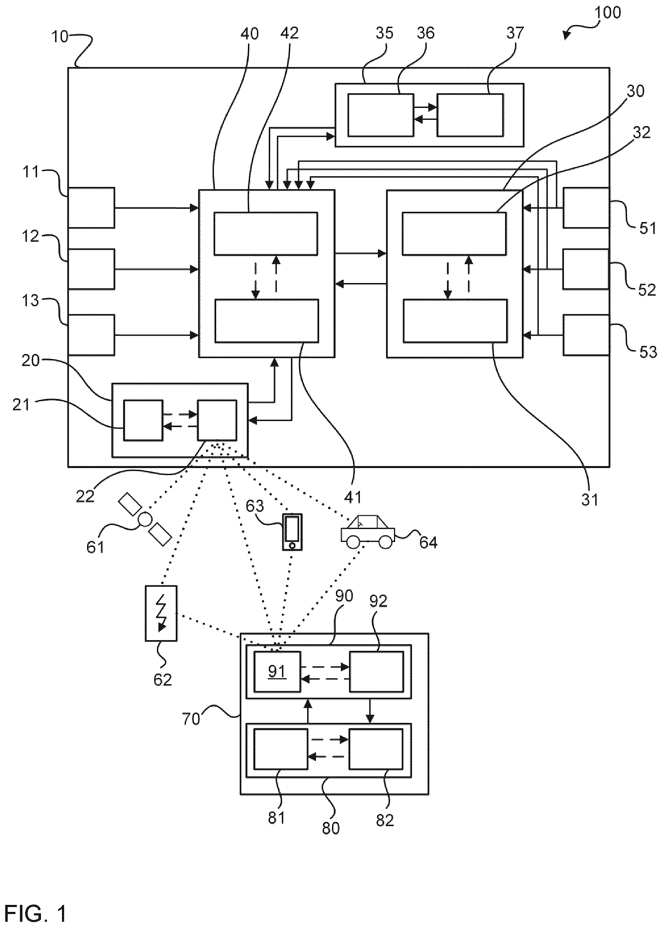

Figur 1 zeigt eine schematische Darstellung eines erfindungsgemäßen Systems 100 aus einem erfindungsgemäßen Fahrzeug 10, das mit einem erfindungsgemäßen Netzwerkserver 70 kommuniziert. Das Bezugszeichen 10 bezeichnet dabei ein Blockdiagramm eines beispielhaften Fahrzeugs 10, insbesondere eines zweispurigen Fahrzeugs mit Verbrennungs-, Elektro- oder Hybridmotor. Das Fahrzeug 10 umfasst eine Vielzahl erster Sensoren, insbesondere einen ersten Sensor 11, einen zweiten Sensor 12 und einen dritten Sensor 13. Die ersten Sensoren 11, 12, 13 sind eingerichtet zum Erfassen von Umgebungsdaten des Fahrzeugs 10 und umfassen beispielsweise eine Kamera zum Erfassen eines Bildes einer das Fahrzeug 10 unmittelbar umgebenden Umwelt oder Abstandssensoren, wie beispielsweise Ultraschallsensoren oder LIDAR, zum Erfassen von Abständen zu das Fahrzeug 10 umgebenden Objekten. Die ersten Sensoren 11, 12, 13 übertragen die von ihnen erfassten Umgebungssignale an eine erste Steuereinheit 40 und an ein Fahrsystem 30 des Fahrzeugs 10.

Das Fahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Fahrzeug 10 selbst betreffenden Zustandsdaten, wie beispielsweise aktuelle Lage- und Bewegungsinformationen des Fahrzeugs 10. Bei den zweiten Sensoren handelt es sich folglich beispielsweise um Geschwindigkeitssensoren, Beschleunigungssensoren, Neigungssensoren, Sensoren zum Messen einer Eintauchtiefe eines Stoßdämpfers, Raddrehzahlsensoren oder dergleichen. Die zweiten Sensoren 51, 52, 53 übermitteln die von ihnen erfassten Zustandssignale an die erste Steuereinheit 40 des Fahrzeugs 10. Darüber hinaus übermitteln die zweiten Sensoren 51, 52, 53 ihre Messergebnisse unmittelbar an ein Fahrsystem 30 des Fahrzeugs 10.

Das Fahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Der Transponder 22 kommuniziert mit dem internen Speicher 21 des ersten Kommunikationsmoduls 20, beispielsweise über einen geeigneten Datenbus. Das erste Kommunikationsmodul 20 kommuniziert auch mit der ersten Steuereinheit 40. Darüber hinaus ist das erste Kommunikationsmodul 20 dafür eingerichtet, mit einem mobilen Netzwerkserver 70, insbesondere einem Backendserver eines Fahrzeugherstellers oder dessen Servicepartner, zu kommunizieren. Das erste Kommunikationsmodul 20 ist ferner dafür eingerichtet, mit einem Fahrzeug 64 zu kommunizieren, das ebenso ausgebildet ist, wie das Fahrzeug 10. Das Kommunikationsmodul 20 ist ferner dafür eingerichtet, mit einem mobilen Endgerät 63, und mit einer elektrischen Ladestation 62 zu kommunizieren. Die Kommunikation erfolgt dabei insbesondere über eine Drahtlosschnittstelle, beispielsweise über WLAN, ein Mobilfunknetz (4G oder 5G) Fahrzeug-zu-Fahrzeug Kommunikation und dergleichen.

Das Fahrzeug 10 weist ferner das Fahrsystem 30 auf, das zum vollständig automatischen Fahrbetrieb, insbesondere zur Längs- und Querführung, des Fahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Fahrzeug 10 durchzuführenden Manöver eingerichtet ist. Das Navigationsmodul 32 ist ferner bevorzugt zum Durchführen spezifischer Manöver des Fahrzeugs 10 ausgebildet, wie beispielsweise Einpark- und Ausparkmanöver. Darüber hinaus umfasst das Fahrsystem 30 einen internen Speicher 31, der mit dem Navigationsmodul 32 kommuniziert, beispielsweise über einen geeigneten Datenbus. Die Funktionalität des Fahrsystems 30 wird von der Steuereinheit 40 kontrolliert.

Das Fahrzeug 10 weist ferner eine erste Steuereinheit 40 auf, welche zum Durchführen der Schritte des Fahrzeugs 10 im erfindungsgemäßen Verfahren eingerichtet ist. Dabei führt die Steuereinheit 40 die Schritte selbst durch oder steuert die anderen Komponenten des Fahrzeugs 10 entsprechend an. Hierzu verfügt die erste Steuereinheit 40 über einen internen Speicher 41 und eine CPU 42, welche miteinander kommunizieren, beispielsweise über einen geeigneten Datenbus. Darüber hinaus steht die erste Steuereinheit 40 in Kommunikationsverbindung mit zumindest den ersten Sensoren 11, 12, 13, den zweiten Sensoren 51, 52, 53, dem ersten Kommunikationsmodul 20, dem Fahrsystem 30 und der Nutzerschnittstelle 35, beispielsweise über eine oder mehrere jeweilige CAN-Verbindungen, eine oder mehrere jeweilige SPI-Verbindungen, oder andere geeignete Datenverbindungen.

Das Fahrzeug 10 weist ferner eine Nutzerschnittstelle 35 mit Eingabemitteln 36 zum Erfassen einer Nutzereingabe eines Nutzers und Ausgabemitteln 37 zum Ausgeben einer Mitteilung, beispielsweise einer Eingabeaufforderung, an einen Nutzer auf. Bei der Nutzerschnittstelle 35 handelt es sich insbesondere um einen Touchscreen eines Infotainmentsystems des Fahrzeugs 10. Zusätzlich kann zumindest die Funktionalität der Nutzerschnittstelle 35 über ein mit dem Fahrzeug 10 über das Kommunikationsmodul 20 verbundenes Smartphone 63 bereitgestellt werden, insbesondere über eine darauf installierte Anwendung (App).

Der Netzwerkserver 70 weist eine zweite Steuereinheit 80 auf, welche zum Durchführen von Rechenoperationen im erfindungsgemäßen Verfahren eingerichtet ist und über einen internen Speicher 81 und eine CPU 82 verfügt, welche über einen geeigneten Datenbus miteinander kommunizieren. Der Netzwerkserver 70 weist ferner ein zweites Kommunikationsmodul 90 auf. Das zweite Kommunikationsmodul 90 weist einen Speicher 92 und einen oder mehrere Transponder beziehungsweise Sendeempfänger 91 auf. Bei den Transpondern 91 handelt es sich um einen Funk-, WLAN-, GPS- oder Bluetooth-Sendeempfänger oder dergleichen. Der Transponder 91 kommuniziert mit dem internen Speicher 92 des zweiten Kommunikationsmoduls 90, beispielsweise über einen geeigneten Datenbus. Bevorzugt ist das zweite Kommunikationsmodul 90 dazu eingerichtet, über ein Mobilfunknetz zu kommunizieren.

Die Ladestation 62 und das mobile Endgerät 63 weisen jeweils ebenfalls ein drittes beziehungsweise viertes Kommunikationsmodul und eine dritte beziehungsweise vierte Steuereinheit auf und stehen in Kommunikationsverbindung mit dem Netzwerkserver 70 und dem Fahrzeug 10. Die Ladestation 62 weist ferner Mittel zum Laden eines Energiespeichers eines elektrischen Fahrzeugs 10 auf. Die Ladestation 62 ist bevorzugt mit einer Energiequelle oder einem Energiespeicher, bevorzugt mit einem Stromnetz, verbunden.

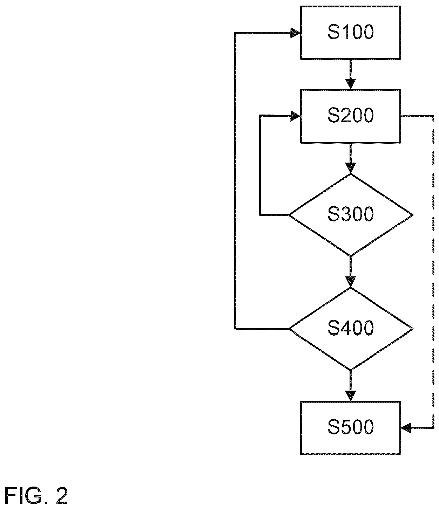

Figur 2 zeigt ein schematisches Ablaufdiagramm eines im erfindungsgemäßen System durchgeführten erfindungsgemäßen Verfahrens gemäß einer Durchführungsform.

In einem Schritt S100 des Verfahrens erfolgt eine manuelle Quer- und Längsführung des Fahrzeugs durch einen Nutzer, sprich der Nutzer steuert das Fahrzeug 10. Dabei erfolgt in Schritt S200 stets ein Erfassen der manuellen Fahrzeugführung und Speichern von erfassten Daten zur manuellen Fahrzeugführung für ein gleitendes Intervall, insbesondere für ein gleitendes Zeitfenster von 5 min vor einem aktuellen Zeitpunkt und/oder für einen gleitenden Streckenabschnitt von 50 m vor der aktuellen Position.

In dem Schritt S300 erfolgt ein automatisches Erkennen, ob die manuelle Fahrzeugführung an einer Parkposition abgeschlossen ist. Ergibt dieses Erkennen, dass die Fahrzeugführung nicht abgeschlossen ist, geht das Verfahren erneut zu Schritt S200 über und es erfolgt weiterhin ein Erfassen und Speichern von Daten zur manuellen Fahrzeugführung in einem Ringspeicher.

Wird in Schritt S300 jedoch der Abschluss der manuellen Fahrzeugführung an einer Parkposition erkannt, wird in Schritt S400 über das Ausgabemittel 37 der Nutzerschnittstelle 35 eine Eingabeaufforderung an den Nutzer ausgegeben, mit welcher der Nutzer aufgefordert wird eine Eingabe zu tätigen, ob die aktuelle Parkposition als eine definierte Parkposition gespeichert werden soll. Ferner wird in Schritt S400 die in Reaktion auf die Eingabeaufforderung abgegebene Nutzereingabe mittels des Eingabemittels 36 der Nutzerschnittstelle 35 erfasst.

Zeigt die Nutzereingabe aus Schritt S400 an, dass der Nutzer ein Speichern der aktuellen Parkposition als definierte Parkposition wünscht, wird in Schritt S500 ein erfindungsgemäßer Parkdatensatz mit Position eines Startbereichs und Trajektorieinformationen zu der definierten Parkposition anhand der in Schritt S200 gespeicherten Daten zur manuellen Fahrzeugführung ermittelt und im Speicher 41 der Steuereinheit 40 abgespeichert.

### Bezugszeichenliste

- 10: Fahrzeug
- 11: erster Sensor
- 12: zweiter Sensor
- 13: dritter Sensor
- 20: Kommunikationsmodul
- 21: Speicher
- 22: Transponder
- 30: Fahrsystem
- 31: Speicher
- 32: Navigationsmodul
- 35: Nutzerschnittstelle
- 36: Eingabemittel
- 37: Ausgabemittel
- 40: Steuereinheit
- 41: Speicher
- 42: CPU
- 51: vierter Sensor
- 52: fünfter Sensor
- 53: sechster Sensor
- 61: Satellit
- 62: Ladestation
- 63: mobiles Endgerät (Smartphone)
- 64: Fahrzeug
- 70: Netzwerkserver
- 80: Steuereinheit
- 81: Speicher
- 82: CPU
- 90: Kommunikationsmodul
- 91: Transponder
- 92: Speicher
- 100: System

## Patentansprüche

1. Verfahren zum automatisierten Parken eines Fahrzeugs (10), aufweisend die Verfahrensschritte:
Ermitteln einer Nutzereingabe eines Nutzers zur Auswahl einer definierte Parkposition als Navigationsziel;
Ermitteln eines Parkdatensatzes zu der definierten Parkposition in Reaktion auf die Nutzereingabe, der Parkdatensatz, aufweisend:
(a) eine Position eines Startbereichs einer automatisierten Fahrzeugführung des Fahrzeugs (10) zu der definierten Parkposition; und
(b) Trajektorieinformationen einer automatisierten Fahrzeugführung von dem Startbereich zur definierten Parkposition, die Trajektorieinformationen aufweisend:
(i) eine Mehrzahl die Quer- und Längsführung des Fahrzeugs (10) entlang der Trajektorie betreffende Odometriedaten, und
(ii) auf Bilddaten basierende Umgebungsdaten eines Fahrschlauchs der Trajektorie; Festlegen der Position des Startbereichs des ermittelten Parkdatensatzes zu der definierten Parkposition als Navigationsziel einer GPS-gestützten Navigation;
Durchführen der Routenführung bis zum Erreichen des Navigationsziels; und
Durchführen einer automatisierten Fahrzeugführung von dem Startbereich zu der definierten Parkposition in Reaktion auf die Detektion der Fahrzeugposition in dem Startbereich und basierend auf den Trajektorieinformationen des ermittelten Parkdatensatzes.

2. Verfahren nach Anspruch 1, wobei die Umgebungsdaten für eine Vielzahl von Punkten entlang der Trajektorie Bilddaten, eine 3D-Punktwolke und/oder Strukturdaten des Fahrschlauchs aufweisen.

3. Verfahren nach Anspruch 1 oder 2, ferner aufweisend die Verfahrensschritte:
Ermitteln einer GPS-Position des Fahrzeugs (10) am Ende der Routenführung;
Ermitteln einer relativen Raumlage von dem Fahrzeug (10) und der Position des Startbereichs;
Ausgabe von auf der relativen Raumlage basierenden Fahranweisungen an einen Nutzer; Initiieren der automatisierten Fahrzeugführung beim Erreichen des Startbereichs.

4. Verfahren nach Anspruch 3, wobei eine Ortsauflösung der Ermittlung der relativen Raumlage höher ist als eine Ortsauflösung der GPS-gestützten Navigation.

5. Verfahren nach Anspruch 1 oder 2, ferner aufweisend die Verfahrensschritte:
Ermitteln einer GPS-Position des Fahrzeugs (10) am Ende der Routenführung;
Ermitteln einer relativen Raumlage von dem Fahrzeug (10) und einem Fangbereich der definierten Parkposition und Ausgabe von auf der relativen Raumlage basierenden Fahranweisungen an einen Nutzer; und
Initiieren der automatisierten Fahrzeugführung beim Erreichen des Fangbereichs,
wobei der Fangbereich einen Abbildungsbereich bildgebender Sensoren des Fahrzeugs entlang der Trajektorie vom Startbereich zur definierten Parkposition umfasst.

6. Verfahren nach einem der vorangehenden Ansprüche, ferner aufweisend die Verfahrensschritte:
Manuelle Quer- und Längsführung des Fahrzeugs (10) durch einen Nutzer;
Erfassen der manuellen Fahrzeugführung und Speichern von erfassten Daten zur manuellen Fahrzeugführung für ein gleitendes Intervall;
Erkennen eines Abschlusses der manuellen Fahrzeugführung an einer Parkposition;
Ausgabe einer Eingabeaufforderung an den Nutzer, betreffend ein Speichern der Parkposition als definierte Parkposition und Ermitteln der Nutzereingabe; und
Ermitteln des Parkdatensatzes zu der definierten Parkposition anhand der gespeicherten Daten zur manuellen Fahrzeugführung in Reaktion auf die Nutzereingabe,
wobei die Eingabeaufforderung Informationen zu der erfassten manuellen Fahrzeugführung in dem gleitenden Intervall aufweist und die Nutzereingabe eine Auswahl einer Position des Startbereichs aus den Informationen aufweist.

7. Verfahren nach Anspruch 7, wobei die Informationen eine in dem gleitenden Intervall befahrene Trajektorie umfassen und mit der Nutzereingabe nur solche Punkt der Trajektorie als Position des Startbereichs wählbar sind, für den die gespeicherten Daten zur manuellen Fahrzeugführung eine GPS-Position aufweisen.

8. Verfahren nach Anspruch 6 oder 7, wobei die gespeicherten Daten zur manuellen Fahrzeugführung Odometriedaten, Positionsdaten und Bilddaten eines Fahrschlauchs des Fahrzeugs aufweisen und/oder in einem Ringspeicher gespeichert werden.

9. Fahrzeug (10), aufweisend zumindest einen zum Erfassen von Umgebungsdaten eingerichteten ersten Sensor (11, 12, 13); zumindest einen zum Erfassen von Fahrzeugdaten eingerichteten zweiten Sensor (51, 52, 53); eine Ausgabemittel (37) und Eingabemittel (36) aufweisende Nutzerschnittstelle (35) und eine zum Durchführen eines Verfahrens nach einem der Ansprüche 1 bis 8 eingerichtete erste Steuereinheit (40).

10. Computerprogramm, umfassend Befehle, die bei der Ausführung des Programms durch eine Steuereinheit (40) eines Fahrzeugs (10) gemäß Anspruch 9, diese veranlassen, die Schritte eines Verfahrens gemäß einem der Patentansprüche 1 bis 8 durchzuführen.

## Claims

1. Method for automated parking of a vehicle (10), comprising the method steps of:
determining a user input from a user to select a defined parking position as a navigation destination;
determining a parking data set for the defined parking position in response to the user input, the parking data set comprising:
(a) a position of a starting region of an automated vehicle guidance of the vehicle (10) to the defined parking position; and
(b) trajectory information of an automated vehicle guidance from the starting region to the defined parking position, the trajectory information comprising:
(i) a plurality of odometry data relating to the transverse and longitudinal guidance of the vehicle (10) along the trajectory, and
(ii) environmental data, based on image data, of a driving path of the trajectory;
specifying the position of the start region of the determined parking data set to the defined parking position as the navigation destination of a GPS-supported navigation;
carrying out route guidance until the navigation destination is reached; and
carrying out an automated vehicle guidance from the starting region to the defined parking position in response to the detection of the vehicle position in the starting region and based on the trajectory information of the determined parking data set.

2. Method according to claim 1, wherein the environmental data for a plurality of points along the trajectory comprises image data, a 3D point cloud and/or structural data of the driving path.

3. Method according to either claim 1 or claim 2, further comprising the method steps of:
determining a GPS position of the vehicle (10) at the end of the route guidance;
determining a relative spatial position of the vehicle (10) and the position of the starting region;
issuing driving instructions based on the relative spatial position to a user; initiating automated vehicle guidance upon reaching the starting region.

4. Method according to claim 3, wherein a spatial resolution of the determination of the relative spatial position is higher than a spatial resolution of the GPS-supported navigation.

5. Method according to either claim 1 or claim 2, further comprising the method steps of:
determining a GPS position of the vehicle (10) at the end of the route guidance;
determining a relative spatial position of the vehicle (10) and a capture region of the defined parking position and issuing driving instructions based on the relative spatial position to a user; and
initiating automated vehicle guidance upon reaching the capture region, wherein the capture region comprises an imaging region of imaging sensors of the vehicle along the trajectory from the starting region to the defined parking position.

6. Method according to any of the preceding claims, further comprising the method steps of:
manual transverse and longitudinal guidance of the vehicle (10) by a user;
recording the manual vehicle guidance and storing recorded manual vehicle guidance data for a sliding interval;
detecting completion of the manual vehicle guidance at a parking position;
issuing a prompt to the user regarding saving the parking position as a defined parking position and determining the user input; and
determining the parking data set for the defined parking position from the stored manual vehicle guidance data in response to the user input, wherein the prompt comprises information about the detected manual vehicle guidance in the sliding interval and the user input comprises a selection of a position of the starting region from the information.

7. Method according to claim 7, wherein the information comprises a trajectory traveled in the sliding interval and, with the user input, only the points of the trajectory for which the stored data for manual vehicle guidance have a GPS position can be selected as the position of the starting region.

8. Method according to claim 6 or 7, wherein the stored data for manual vehicle guidance comprise odometry data, position data and image data of a driving path of the vehicle and/or are stored in a ring memory.

9. Motor vehicle (10) comprising at least one first sensor (11, 12, 13) configured for acquiring environmental data; at least one second sensor (51, 52, 53) configured for acquiring vehicle data; a user interface (35) comprising output means (37) and input means (36) and a first control unit (40) configured for carrying out a method according to any of claims 1 to 8.

10. Computer program comprising instructions which, when the program is executed by a control unit (40) of a vehicle (10) according to claim 9, cause the control unit to carry out the steps of a method according to any of claims 1 to 8.

## Revendications

1. Procédé de stationnement automatisé d'un véhicule (10), présentant les étapes de procédé :
détermination d'une entrée d'utilisateur d'un utilisateur pour sélectionner une position de stationnement définie comme destination de navigation ;
détermination d'un jeu de données de stationnement pour la position de stationnement définie en réponse à l'entrée d'utilisateur, le jeu de données de stationnement présentant :
(a) une position d'une zone de départ d'un guidage de véhicule automatisé du véhicule (10) vers la position de stationnement définie ; et
(b) des informations de trajectoire d'un guidage de véhicule automatisé depuis la zone de départ jusqu'à la position de stationnement définie, les informations de trajectoire présentant :
(i) une pluralité de données odométriques concernant le guidage transversal et longitudinal du véhicule (10) le long de la trajectoire, et
(ii) des données d'environnement d'un tube de circulation de la trajectoire, basées sur des données d'image ;
spécification de la position de la zone de départ du jeu de données de stationnement déterminé par rapport à la position de stationnement définie comme destination de navigation d'une navigation assistée par GPS ;
réalisation du guidage routier jusqu'à ce que la destination de navigation soit atteinte ; et
réalisation d'un guidage de véhicule automatisé depuis la zone de départ jusqu'à la position de stationnement définie en réponse à la détection de la position de véhicule dans la zone de départ et sur la base des informations de trajectoire du jeu de données de stationnement déterminé.

2. Procédé selon la revendication 1, dans lequel les données d'environnement présentent, pour une pluralité de points le long de la trajectoire, des données d'image, un nuage de points 3D et/ou des données structurelles du tube de circulation.

3. Procédé selon la revendication 1 ou 2, présentant en outre les étapes de procédé :
détermination d'une position GPS du véhicule (10) à la fin du guidage routier ;
détermination d'une position spatiale relative du véhicule (10) et de la position de la zone de départ ;
émission d'instructions de conduite basées sur la position spatiale relative à un utilisateur ; lancement du guidage de véhicule automatisé lorsqu'il atteint la zone de départ.

4. Procédé selon la revendication 3, dans lequel une résolution spatiale de la détermination de la position spatiale relative est supérieure à une résolution spatiale de la navigation assistée par GPS.

5. Procédé selon la revendication 1 ou 2, présentant en outre les étapes de procédé :
détermination d'une position GPS du véhicule (10) à la fin du guidage routier ;
détermination d'une position spatiale relative du véhicule (10) et d'une zone de capture de la position de stationnement définie et émission à un utilisateur des instructions de conduite basées sur la position spatiale relative ; et
lancement du guidage de véhicule automatisé lorsque la zone de capture est atteinte, dans lequel la zone de capture comprend une zone d'imagerie de capteurs d'imagerie du véhicule le long de la trajectoire depuis la zone de départ jusqu'à la position de stationnement définie.

6. Procédé selon l'une des revendications précédentes, présentant en outre les étapes de procédé :
guidage transversal et longitudinal manuel du véhicule (10) par un utilisateur ;
saisie du guidage de véhicule manuel et enregistrement de données saisies relatives au guidage de véhicule manuel pour un intervalle glissant ;
reconnaissance d'une fin du guidage de véhicule manuel à une position de stationnement ;
émission d'une invite de commande à l'utilisateur concernant un enregistrement de la position de stationnement en tant que position de stationnement définie et la détermination de l'entrée d'utilisateur ; et
détermination du jeu de données de stationnement pour la position de stationnement définie à l'aide des données enregistrées concernant le guidage de véhicule manuel en réponse à l'entrée d'utilisateur, dans lequel l'invite de commande comprend des informations concernant le guidage de véhicule manuel saisi dans l'intervalle glissant et l'entrée d'utilisateur présente une sélection d'une position de la zone de départ à partir des informations.

7. Procédé selon la revendication 7, dans lequel les informations comprennent une trajectoire parcourue dans l'intervalle glissant et, avec l'entrée d'utilisateur, seuls les points de la trajectoire pour lesquels les données enregistrées pour le guidage de véhicule manuel présentent une position GPS peuvent être sélectionnés en tant que position de la zone de départ.

8. Procédé selon la revendication 6 ou 7, dans lequel les données enregistrées pour le guidage de véhicule manuel présentent des données odométriques, des données de position et des données d'image d'un tuyau de circulation du véhicule et/ou sont enregistrées dans une mémoire annulaire.

9. Véhicule (10), présentant au moins un premier capteur (11, 12, 13) configuré pour la saisie de données d'environnement, au moins un second capteur (51, 52, 53) configuré pour la saisie de données de véhicule, une interface utilisateur (35) présentant un moyen d'émission (37) et un moyen d'entrée (36) et une première unité de commande (40) configurée pour la réalisation du procédé selon l'une des revendications 1 à 8.

10. Programme informatique comprenant des instructions qui, lorsque le programme est exécuté par une unité de commande (40) d'un véhicule (10) selon la revendication 9, amènent cette unité à réaliser un procédé selon l'une des revendications 1 à 8.
